# EUROPÄISCHE PATENTANMELDUNG

(11) **EP 1 669 874 A1**
(43) Veröffentlichungstag der Anmeldung: **14.06.2006**
(21) Anmeldenummer: 05023917.7
(22) Anmeldetag: 03.11.2005
(51) Int. Cl.: G06F 11/36

(54) **Verfahren zur automatischen Generierung von Implementierungen von generellen Testabläufen**

(30) Priorität: 02.12.2004 DE 102004058312
(71) Anmelder: Deutsches Zentrum für Luft- und Raumfahrt e.V., 51147 Köln (DE)
(72) Erfinder: Ebrecht, Lars, 38100 Braunschweig (DE); Rumke, Axel, 38110 Braunschweig (DE); Gantz, Oliver, 38154 Königslutter (DE)
(74) Vertreter: Gerstein, Hans Joachim

(57) **Zusammenfassung**

Ein Verfahren zur automatischen Generierung von Implementierungen von generellen Testabläufen (1) in eine spezifische Systemumgebung (a, b), um Hardware- oder Software zu testen, wobei die generellen Testabläufe (1), in einem in der spezifischen Systemumgebung (a, b) nicht ausführbaren, maschinenlesbaren Format abgespeichert sind, hat die Schritte:
- Umwandeln des mindestens einen generellen Testablaufs (1) in ein vordefiniertes strukturiertes Zwischenformat (2);
- automatisches Transformieren des mindestens einen generellen Testablaufs (1) von dem strukturierten Zwischenformat (2) in eine spezielle, in der spezifischen Systemumgebung ausführbare Testsequenz mit einer Abfolge von parametrierten Testroutinen (4a, 4b) durch
   - Auswählen von für die spezifische Systemumgebung (a, b) vordefinierten Testroutinen (4a, 4b) in Abhängigkeit von der im strukturierten Zwischenformat (2) vorliegenden Beschreibung des generellen Testablaufs (1), und
   - Zuordnen von Parametern für die ausgewählten Testroutinen (4a, 4b) in Abhängigkeit von der im strukturierten Zwischenformat (2) vorliegenden Beschreibung des generellen Testablaufs (1),
wobei die parametrisierten Testabläufe (4a, 4b) zu einer speziellen Abfolge entsprechend der Vorgaben des mindestens einen generellen Testablaufs (1) in einer in der spezifischen Systemumgebung ausführbaren Testsequenz (3a, 3b) zusammengefasst werden.

## Beschreibung

Die Erfindung betrifft ein Verfahren zur automatischen Generierung von Implementierungen von generellen Testabläufen in eine spezifische Systemumgebung, um Hardware- oder Software zu testen, wobei die generellen Testabläufe in einem in der spezifischen Systemumgebung nicht ausführbaren, maschinenlesbaren Format abgespeichert sind.

Die zunehmende Komplexität technischer Systeme, insbesondere von mikroprozessorgesteuerten elektronischen Geräten und Anlagen erfordert die Durchführung aufwändiger Tests zur Überprüfung der Funktionsfähigkeit bei unterschiedlichen Randbedingungen. Der Aufwand zur Definition der auszuführenden Testsequenzen und Implementierung für eine spezifische Systemumgebung ist erheblich. Zudem ist vor allem bei sicherheitskritischen, komplexen technischen Systemen, wie beispielsweise Flugzeugen, Eisenbahnen und Kraftfahrzeugen, vor der Freigabe, unbedingt die Durchführung einer Vielzahl von zuverlässig definierten und ausgeführten Tests erforderlich.

In dem europäischen Standard ETSI ES 201 873-1, V2.2.1 (2003-02) "Methods for Testing and Specification (MTS); The Testing and Test and Control Notation version 3; Part 1: TTCN-3 Core Language" ist eine Programmiersprache zur Spezifizierung aller Arten von Tests an reaktiven Systemen über eine Vielzahl von Kommunikationsschnittstellen definiert. Hierbei handelt es sich um eine textbasierte Testablaufbeschreibungssprache in einem standardisierten Austauschformat, das nur in einer geeigneten Systemumgebungen automatisch zur Ausführung der Testroutinen verwendet werden kann.

In der US 2003/0145280 A1 ist ein System mit einer Einrichtung zur Ausführung von Testsequenzprogrammen beschrieben, das mit Hilfe eines Sequenzeditors und Prozessmodellen erzeugt wird. Das Testsequenzprogramm wird systemspezifisch vom Benutzer definiert. Auch hier ist die Definition der codierten Testsequenz aufwändig und fehleranfällig. Mit Hilfe eines XML-Generators werden Reportdateien im Extensible Markup Language Format XML erzeugt, um die Ergebnisse des durchgeführten Tests darzustellen.

Weiterhin sind aus G. Danebrock: Testintegration mit Testing Markup Languages; www.avoca-vsm.com/dateien-download/pstt-testintegration.pdf, 2002 die Definition von Testsequenzen im Extensible Markup Language-Format XML bekannt. Dies ist eine allgemein gültige browserfähige Datenbeschreibungssprache.

Die manuelle Implementierung von Testsequenzen in Programmiersprachen ist sehr zeitaufwändig, da eine Testsequenz eine erhebliche Anzahl von Programmcodezeilen umfassen kann. Bei der Programmierung von Testsequenzen besteht auch die erhöhte Gefahr von Fehlern, die zum Teil erst bei der Simulation der Testsequenzen erkannt werden und aufgrund des sequenziellen Ablaufs der Testsequenzen den Zeitaufwand des Komponententests erhöhen. Dies liegt daran, dass die jeweilige Testsequenz unterbrochen, der Fehler beseitigt und die Testsequenz erneut gestartet werden muss. Die Fehlerbeseitigung erfolgt iterativ solange, bis die Testsequenzimplementierung fehlerfrei ist. Hieraus resultiert ein erheblicher zusätzlicher Zeitaufwand, da die Testsequenzen in Echtzeit simuliert werden und mehrere Stunden laufen.

Zudem werden herkömmlicherweise die Testsequenzimplementierungen testlaborspezifisch vorgenommen und sind auf eine spezifische Systemumgebung abgestimmt. Für jedes Testlabor muss somit eine eigene Testsequenzimplementierung durchgeführt werden, die sich teilweise erheblich in ihrer Art und Weise, z. B. in der Wahl der Programmiersprache unterscheiden, da die Testlabore in ihrem Aufbau und ihrer Modellstruktur verschieden sind.

Aufgabe der Erfindung ist es daher, ein verbessertes Verfahren zur automatischen Generierung von Implementierungen von generellen Testsequenzen in eine spezifische Systemumgebung zum Testen von Hardware- oder Software zu schaffen, wobei die generellen Testabläufe in einem in der spezifischen Systemumgebung nicht ausführbaren, maschinenlesbaren Format abgespeichert sind.

Die Aufgabe wird mit dem gattungsgemäßen Verfahren erfindungsgemäß gelöst, durch die Schritte:
- Umwandeln des mindestens einen generellen Testablaufs in ein vordefiniertes strukturiertes Zwischenformat;
- automatisches Transformieren des mindestens einen generellen Testablaufs von dem strukturierten Zwischenformat in eine spezielle, in der spezifischen Systemumgebung ausführbare Testsequenz mit einer Abfolge von parametrierten Testroutinen durch:
   - Auswählen von für die spezifische Systemumgebung vordefinierten Testroutinen in Abhängigkeit von der im strukturieren Zwischenformat vorliegenden Beschreibung des generellen Testablaufs, und
   - Zuordnen von Parametern für die ausgewählten Testroutinen in Abhängigkeit von der im strukturierten Zwischenformat vorliegenden Beschreibung des generellen Testablaufs,
   wobei die parametrisierten Testroutinen zu einer speziellen Abfolge entsprechend der Vorgaben des mindestens einen generellen Testablaufs in einem in der spezifischen Systemumgebung ausführbaren Testsequenz zusammengefasst werden.

Es wird somit vorgeschlagen, generelle Testabläufe, die von Entwicklungsingenieuren vorgegeben und in einem maschinenlesbaren Format, beispielsweise als Textdokument oder Datenbankformat, abgespeichert sind, in ein vordefiniertes strukturiertes Zwischenformat umzuwandeln. Das vordefinierte strukturierte Zwischenformat kann beispielsweise das Extensible Markup Language Format XML sein.

Ausgehend von diesem definiert systemumgebungsunabhängigen strukturierten Zwischenformat erfolgt dann eine Transformation in eine in der spezifischen Systemumgebung ausführbare Testsequenz, indem für die spezifische Systemumgebung vordefinierte Testroutinen aus einer Sammlung von Testroutinen ausgewählt und parametriert werden. Diese Auswahl der Testroutinen und der Parameter erfolgt durch Analyse des im strukturierten Zwischenformat vorliegenden Testablaufs und kann aufgrund der bekannten Struktur des Zwischenformates automatisch erfolgen. Die parametrierten Testroutinen werden dann entsprechend der Vorgaben des generellen Testablaufs in einer speziellen Abfolge zu der Testsequenz zusammengefasst.

Für jede spezifische Systemumgebung, in der elektronische Geräte und Anlage und ggf. auf diesen ausführbare Software getestet werden, brauchen somit nur eine bestimmte Anzahl vordefinierter und erprobter Testroutinen vorgehalten werden. Dann kann ein für den Entwicklungsingenieur verständlicher genereller Testablauf zuverlässig und automatisch in eine Testsequenz überführt werden, die in der spezifischen Systemumgebung lauffähig ist.

Die generellen Testabläufe können unstrukturiert sein und erst durch die Umwandlung in das Zwischenformat eine definierte Struktur erhalten.

Vorteilhaft ist es, wenn das Umwandeln in das strukturierte Zwischenformat selbstlernend mittels einer ergänzbaren Abbildungsdefinition von Teilen des generellen Testablaufs, auf das Zwischenformat erfolgt.

Die Erfindung wird nachfolgend anhand der beigefügten Zeichnungen beispielhaft näher erläutert. Es zeigt:

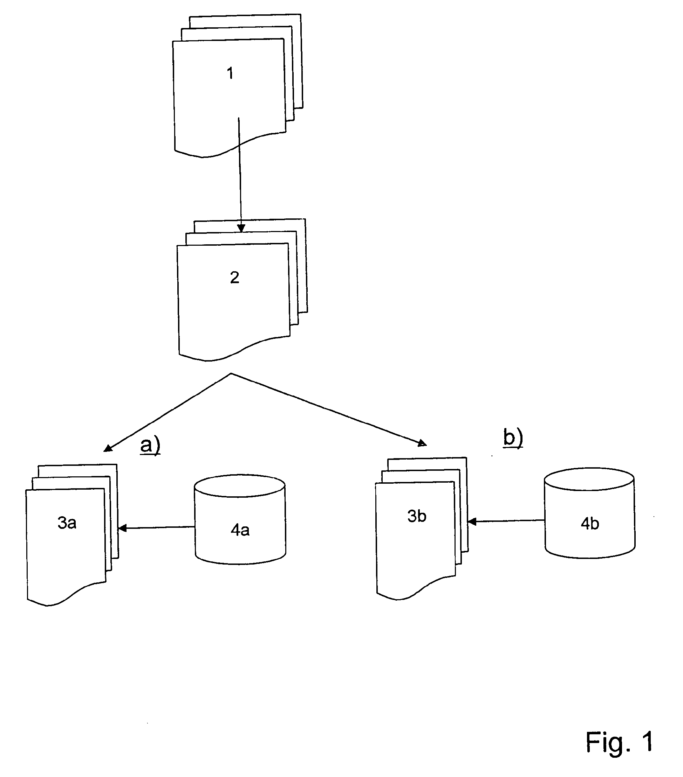

- Figur 1 -: Blockdiagramm des Verfahrensablaufes zur Implementierung von generellen Testabläufen in eine spezifische Systemumgebung;
- Figur 2 -: Basisstruktur für Dateien im XML-Zwischenformat zur Darstellung von Test- und Referenzdaten;
- Figur 3 -: Basisstruktur eines Testablaufs im XML-Zwischenformat;
- Figur 4 -: Programmlisting eines Ausschnitts eines Testablaufs im Zwischenformat mit einer Testfall-Dateien und SchnittstellenbeschreibungsDateien enthaltenden Dateiliste;
- Figur 5 -: Ausschnitt eines Testablaufs im Zwischenformat mit einer Ereignisse enthaltenden Schrittliste;
- Figur 6 -: Programmlisting im Zwischenformat einer Schnittstellenbeschreibungs-Datei zur Beschreibung der Schnittstellenstimulationen und -reaktionen;
- Figur 7 -: Struktur einer Testfall-Datei im Zwischenformat zur Definition von Testfällen.

Ausgangsbasis für das erfindungsgemäße Verfahren zur Implementierung von generellen Testabläufen 1 in eine spezifische Systemumgebung a, b bilden die generellen Testabläufe 1, die im maschinenlesbaren Format abgespeichert sind und nicht in der Systemumgebung a, b durch einen Testautomaten ausgeführt werden können. Das maschinenlesbare Format kann beispielsweise eine Textdatei oder Datenbankdatei sein.

Zunächst erfolgt ein Umwandeln des mindestens einen generellen Testablaufs von einem proprietären, offiziellen oder auch inoffiziellen Format in ein formales, strukturiertes, maschinenlesbares und maschinenverarbeitbares elektronisches Zwischenformat 2. In dem Zwischenformat 2 sind alle erforderlichen und eventuell darüber hinausgehenden Informationen bezüglich eines Testablaufs 1 enthalten. Die Struktur der Testabläufe 1 in dem Zwischenformat 2 berücksichtigt die Wiederverwendungsmöglichkeiten und hält zukünftigen Erweiterungen und Änderungen Stand bzw. ist ohne großen Aufwand unter Beibehaltung der bisherigen Struktur erweiterbar. Das Zwischenformat 2 sollte die wesentlichen Eigenschaften von Simulationstests berücksichtigen. Die Überführung der generellen Testabläufe 1 aus dem proprietären, offiziellen bzw. inoffiziellen Format in das Zwischenformat 2 erfolgt automatisch und kann ggf. interaktiv mittels Nutzereingriff durch fehlende oder unzureichende Informationen ergänzt werden. Dabei können selbstlernend, das heißt bei einer Umwandlung nicht bekannte Abbildungsdefinitionen automatisch identifiziert und ergänzende Abbildungsdefinitionen von Teilen des generellen Testablaufs 1 auf das Zwischenformat 2 genutzt werden.

Um testlaborspezifische Implementierungen der generellen Testabläufe 1 automatisch erzeugen zu können, werden für jedes Systemlabor systemumgebungsspezifisch, d. h. testlabor- und testsequenzspezifische, wiederverwendbare Testroutinen 4a, 4b einmalig manuell implementiert, die einmalig einer Fehlerbeseitigung unterzogen wurden. Diese Testroutinen 4a, 4b werden in einem maschinenlesbaren, elektronischen Format persistent gespeichert, z. B. einer Datenbank oder in Dateien. Die Testroutinen 4a, 4b können parametriert und bei der Generierung von verschiedenen, unterschiedlichen Testsequenzimplementierungen wiederverwendet werden.

In einem Transformationsschritt erfolgt dann die automatische Generierung einer Testsequenz 3a, 3b unter Verwendung des Zwischenformats 2 sowie unter Verwendung der parametrierbaren Testroutinen 4a, 4b. Mit Hilfe des Zwischenformats 2 können die jeweiligen Testroutine 4a, 4b ausgewählt und entsprechend des zu implementierenden Testablaufs 1 parametriert werden. Das Ergebnis ist eine testlaborspezifische Testsequenzimplementierung.

Das vordefinierte strukturierte Zwischenformat 2 kann beispielsweise das Extensible Markup Language (XML)-Format sein. Damit wird durch die Umstrukturierung der generelle, nicht in der spezifischen Systemumgebung ausführbare Testablauf in eine browserfähige Dateibeschreibungssprache überführt. Diese wird aber nicht unmittelbar ausgeführt, sondern lediglich als strukturiertes Zwischenformat 2 verwendet, um den in dem strukturierten Zwischenformat 2 vorliegenden Testablauf 1 in einer Abfolge von für eine spezifische Systemumgebung a), b) vordefinierte und ausgetestete Testroutinen 4a, 4b zu überführen und für die Testroutinen 4a, 4b erforderliche Parameter auszulesen.

Das Zwischenformat 2 bietet eine Flexibilität gegenüber Änderungen der Testablauf-Zusammensetzung (Kapselung) für den Fall, dass sich die Testabläufe 1 ändern oder sich die zugrunde liegenden proprietären offiziellen bzw. inoffiziellen Formate der Testabläufe 1 ändern. Die parametrierbaren Testroutinen 4a, 4b ermöglichen die Wiederverwendung der Testroutinen 4a, 4b in verschiedenen Testsequenzen 3a, 3b.

Durch die freie Implementierung und Speicherung von Testroutinen 4a, 4b ergibt sich im Gegensatz zu einer festen Einbindung der Testroutinen 4a, 4b in eine Testsequenzimplementierung eine Unabhängigkeit von Programmiersprachen. Zudem verringert sich die Fehlerrate durch die Wiederverwendung erprobter Testroutinen und die maschinelle Testsequenzgenerierung. Durch die Wiederverwendung und Parametrierung der Testroutinen 4a, 4b wird ein geringerer Implementierungsaufwand von generellen Testabläufen 1 erreicht.

Das Verfahren ist insbesondere anwendbar für die Implementierung von Testsequenzen zur Durchführung von auf Stimulation beruhenden Testabläufen von Hard- und Software.

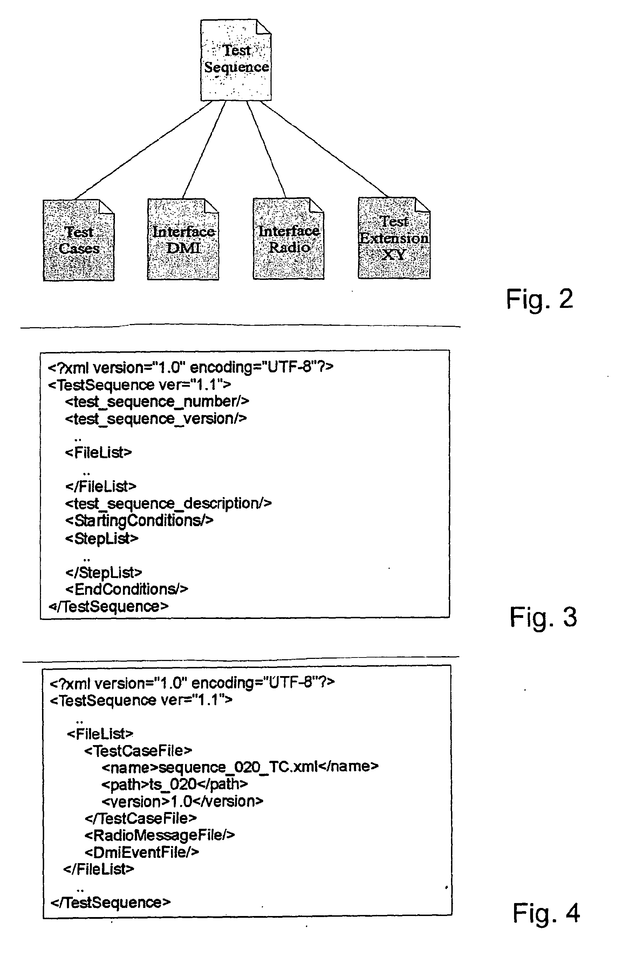

Die Figur 2 zeigt beispielhaft eine Basisstruktur des Extensible Markup Language-Format XML zur Darstellung von Test- und Referenzdaten. Es wird vorgeschlagen, die Daten eines Testablaufs in eine Anzahl verschiedener XML-Dateien aufzuteilen. Dabei können beispielsweise die folgenden drei Typen unterschieden werden:
- die Haupt XML-Datei "TestSequenz",
- der Testfall der Test XML-Datei "TestCases", und
- die schnittstellenspezifischen Dateien "Interface A, B".

Eine vierte als "TestExtension XY" bezeichnete Datei dient nur zur Darstellung, dass die Beschreibung von Tests erweitert werden kann.

Die Hauptdatei "TestSequenz" enthält alle Daten zur Beschreibung eines Testablaufs 1, d. h. die Testsequenznummer, Testsequenzbeschreibung, Start- und Endbedingungen eines Testablaufs 1 und die Testschritte.

Die Figur 3 zeigt die Kernstruktur des XML-Datenformats der Hauptdatei für UNISIG-Testabläufe (Union of European Signaling Companies).

Die untergeordneten Testfalldateien "TestCases" beschreiben die verfügbaren Testfälle und die individuellen Schnittstellendateien "Interface A, B" definieren die Stimulationsereignisse und Reaktionsereignisse bezogen auf eine spezifische Schnittstelle.

Die beiden wichtigsten Elemente in der Hauptdatei "TestSequenz" sind "FileList" und "StepList", dessen Bedeutung und Inhalt im Folgenden erläutert werden.

Das Element "FileList" enthält alle zu einem Testablauf gehörenden Dateien, die den Testablauf spezifisieren. So realisiert die "FileList" die wesentlichen Strukturen der in der Figur 3 gezeigten Testabläufe.

Die Figur 4 zeigt die Unterelemente der "FileList". Die Testfalldatei "TestCaseFile" ist an erster Stelle erwähnt. Die Testfalldatei wird gefolgt durch individuelle Schnittstellendateien, beispielsweise die Datei für die Funkkommunikationsschnittstelle "Radio Message File" und die Schnittstellendateien für die Treibermaschine "DMI Event File" der Steuerungseinrichtung eines Eisenbahnzuges. Jede Datei ist hauptsächlich durch den Dateinamen "Name" und den Dateipfad "Path" definiert.

Die Schnittstellendateien sind genereller, d. h. "Interface A", "Interface B" usw. anstelle von "RadioMethodShortFile" und "DMIEventFile". Falls Sie in einer Liste "Interface" kombiniert sind, sollte die Struktur generell für alle anderen Testspezifikationen auch geeignet sein.

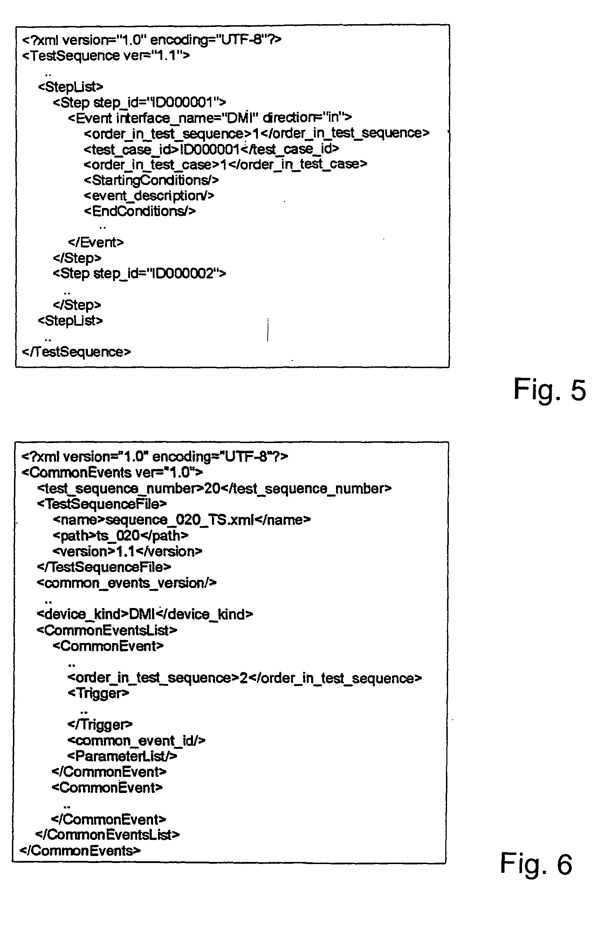

Die in der Figur 5 dargestellte Liste "StepList" enthält alle Testschritte, die den Testprozess und die Reihenfolge der Ereignisse eines Testablaufs spezifizieren. Die Testschritte stellen den Hauptteil eines Testablaufs 1 dar.

Jedes Ereignis "Event" in der "StepList" hat eine eindeutige Zuordnungsnummer innerhalb eines Testablaufs "Order_in_Test_Sequence". Weiterhin ist jedes Ereignis "Event" einer spezifischen Schnittstelle "Interface_name" zugeordnet und seine Richtung "Direction" ist definiert. Zusätzlich enthält das Element "Event" einen Bezug zu dem zugeordneten Testfall "Test_Case_ID" und den Testfallschritt "Order_in_Test_Case". Neben jedem Ereignis "Event" enthält das Element die Beschreibung der Start- und Endbedingungen und eine informelle Beschreibung des Ereignisses "Event". Die Beschreibung des Ereignisses "Event" verbessert die Lesbarkeit und Verständlichkeit der Testschritte.

Die Figur 6 zeigt die wesentliche Struktur einer generellen Schnittstellendatei "CommonEvent". In jeder schnittstellenspezifischen Datei sind Schnittstellenereignisse in der oben beschriebenen Weise im Detail spezifiziert. Dabei ist eine Zuordnung zu dem Testablauf "Test_Sequence_number" und der Testablauf-Hauptdatei "TestSequenceFile" enthalten. Weiterhin wird eine Schnittstellendatei durch einen Schnittstellennamen "Device_kind" bestimmt. Das Element "TestSequenceFile" hat denselben Typ wie die Testfalldateien und Schnittstellendateien in der "File List".

Die Ereignisse "CommonEvent" enthalten die Beziehung zu den spezifischen Testschritten in dem Testablauf "Order_in_Test_Sequence" und zusätzlich einen "Trigger", eine generelle abstrakte Ereignisidentifikationsnummer "Common_Event_ID" und eine Parameterliste "ParameterList". Die abstrakte Ereignisidentifikationsnummer "Common_Event_ID" dient zur Zuordnung einer Funktion oder einer Nachricht einer spezifischen Schnittstelle zu einem Ereignis.

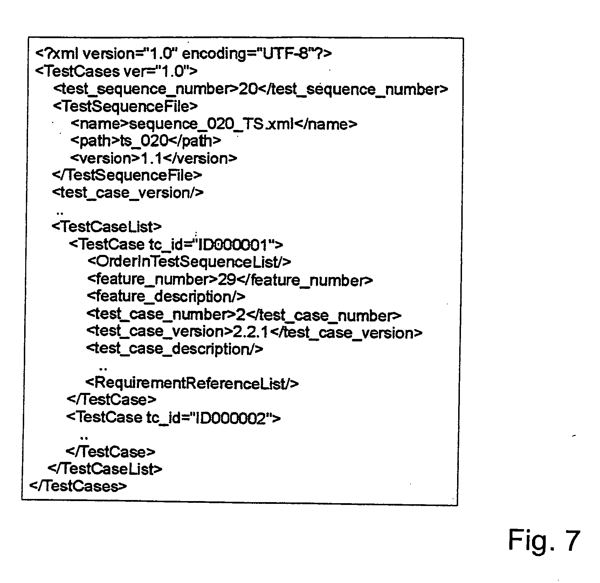

Die Figur 7 lässt eine Struktur der Testfalldatei "TestCases" erkennen. Zunächst verweist die Testfalldatei auf die Testablaufdatei "Test_Sequence_number" und "TestSequenceFile" in ähnlicher Weise wie in der Schnittstellenbeschreibungsdatei in dem Testablauf "XML-Datei". Die Testfälle, die durch einen Testablauf abgedeckt werden, sind in dem Element "TestCaseList" aufgelistet. Die Beschreibung eines Testfalls ist durch eine eindeutige Identifikationsnummer "TC_ID", eine Ordnungstestschrittnummer der Testschritte in dem Testablauf "Order in Test Sequence List", eine Merkmalsnummer "Feature_nummer" und eine Beschreibung "Feature_Description" spezifiziert. Zusätzlich ist die "Testfallnummer "Test_Case_Number", eine informelle Testfallbeschreibung "Test_Case_Description" und die Liste der durch die Testfälle abgedeckten Abschnitte der Systemspezifikation "Requirement Reference List" vorgesehen.

## Patentansprüche

1. Verfahren zur automatischen Generierung von Implementierungen von generellen Testabläufen (1) in eine spezifische Systemumgebung (a, b) um Hardware oder Software zu testen, wobei die generellen Testabläufe (1) in einem in der spezifischen Systemumgebung (a, b) nicht ausführbaren, maschinenlesbaren Format abgespeichert sind, **gekennzeichnet durch**
- Umwandeln des mindestens einen generellen Testablaufs (1) in ein vordefiniertes strukturiertes Zwischenformat (2);
- automatisches Transformieren des mindestens einen generellen Testablaufs (1) von dem strukturierten Zwischenformat (2) in eine spezielle, in der spezifischen Systemumgebung (a, b) ausführbare Testsequenz mit einer Abfolge von parametrierten Testroutinen (4a, 4b) **durch**:
- Auswählen von für die spezifische Systemumgebung (a, b) vordefinierten Testroutinen (4a, 4b) in Abhängigkeit von der im strukturierten Zwischenformat (2) vorliegenden Beschreibung des generellen Testablaufs (1) und
- Zuordnen von Parametern für die ausgewählten Testroutinen (4a, 4b) in Abhängigkeit von der im strukturierten Zwischenformat (2) vorliegenden Beschreibung des generellen Testablaufs (1),
wobei die parametrisierten Testroutinen (4a, 4b) zu einer speziellen Abfolge entsprechend der Vorgaben des mindestens einen generellen Testablaufs (1) in einer in der spezifischen Systemumgebung (a, b) ausführbaren Testsequenz (3a, 3b) zusammengefasst werden.

2. Verfahren nach Anspruch 1, **dadurch gekennzeichnet, dass** die generellen Testabläufe (1) unstrukturiert sind.

3. Verfahren nach Anspruch 1 oder 2, **dadurch gekennzeichnet, dass** das Umwandeln in das strukturierte Zwischenformat (2) selbstlernend mittels einer ergänzbaren Abbildungsdefinition von Teilen des generellen Testablaufs (1), auf das Zwischenformat (2) erfolgt.

4. Verfahren nach einem der vorhergehenden Ansprüche, **dadurch gekennzeichnet, dass** die generellen Testsequenzen (1) in das Extensible Markup Language (XML)-Format als vordefiniertes strukturiertes Zwischenformat (2) umgewandelt werden.
